# DEMANDE DE BREVET EUROPEEN

(11) **EP 2 607 788 A1**
(43) Date de publication de la demande: **26.06.2013**
(21) Numéro de dépôt: 11194696.8
(22) Date de dépôt: 20.12.2011
(51) Int. Cl.: F24B 1/181, F24B 1/185, F24B 1/188, F24B 1/19, F24B 5/02

(54) **Appareil de chauffage de très faible profondeur et à vision étendue**

(71) Demandeur: Cyris, Rudy, 5660 Couvin (BE)
(72) Inventeur: Cyris, Rudy, 5660 Couvin (BE)
(74) Mandataire: Pronovem

(57) **Abrégé**

La présente invention se rapporte à un appareil de chauffage (1) à combustible solide comportant un échangeur de chaleur (5) de second préchauffage, situé dans le haut de la chambre de combustion à la jonction entre le conduit de premier préchauffage de l'air primaire (3) et l'endroit où l'air de combustion pénètre dans la chambre de combustion, ledit échangeur (5) comprenant un déflecteur externe (6) déviant l'air primaire venant du conduit de premier préchauffage (3) et l'envoyant dans le haut de la chambre de combustion, de haut en bas sur toute la hauteur de celle-ci, enveloppant ainsi d'air fortement réchauffé les gaz de combustion et comprenant des chicanes internes (7) situées sur le passage des gaz brûlés, l'échange de chaleur de second préchauffage étant réalisé à la surface de l'échangeur (5) séparant l'air de combustion ayant subi un premier préchauffage et les gaz brûlés.

## Description

### Objet de l'invention

La présente invention se rapporte au domaine des appareils de chauffage domestiques à combustible solide tel que bois, pellets, charbon, briquettes de lignite, etc. et à haut rendement. Ces appareils comportent dans leurs versions les plus performantes des moyens de préchauffage de l'air primaire alimentant la chambre de combustion.

### Etat de la technique

De tous temps, on a donné au poêle domestique un habillage l'associant aux (ou l'intégrant dans les) objets de la vie quotidienne, par exemple avec une forme inspirée d'un meuble ou d'une horloge. Actuellement, une nouvelle génération de poêles, celle des poêles en acier de style contemporain, supplante celle des poêles en fonte.

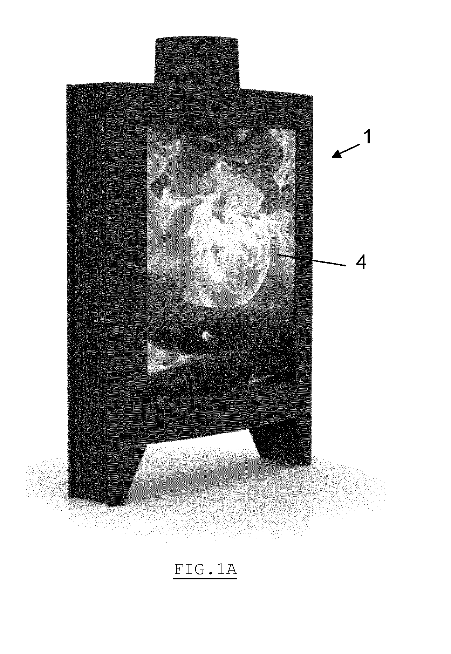

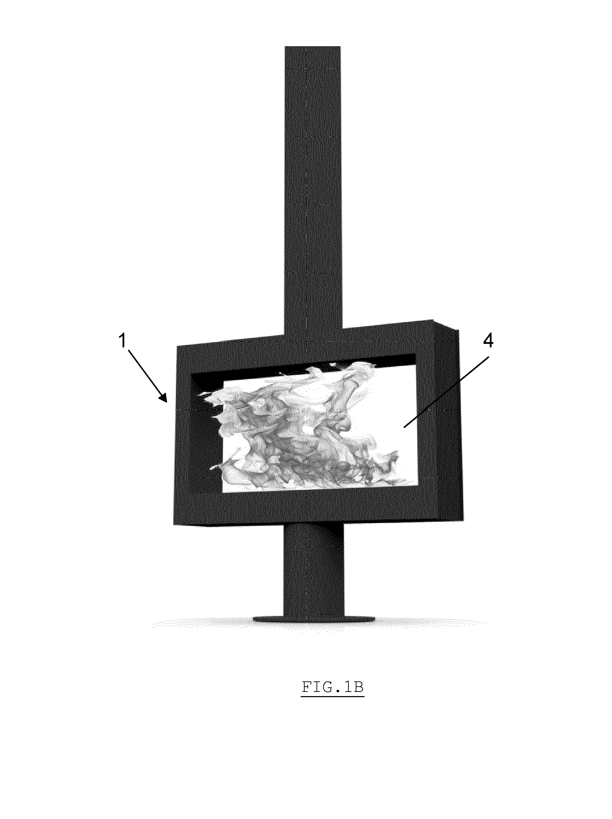

Par ailleurs, les appareils de chauffage domestique à combustible solide, liquide ou gazeux disponibles actuellement sur le marché sont de forme générale cubique, cylindrique, trapézoïdale, etc., qu'il s'agisse d'appareils autonomes (*stand alone*) ou insérés dans une maçonnerie ou un mur. Une manière de donner aux poêles actuels un design contemporain, avec un rappel d'objets de la vie quotidienne au goût du jour et « branchés » tels que *smartphones* ou tablettes électroniques, est de leur donner à la fois une faible profondeur et un accès visuel sous différents angles, voire panoramique (FIG. 1A et 1B).

Cependant, la plupart des poêles disponibles sur le marché possèdent des dimensions se trouvant souvent dans les limites suivantes :
- hauteur : 35 - 120cm ;
- largeur : 30 - 100cm ;
- profondeur : 30 - 70cm.

La profondeur est un paramètre particulièrement important car elle détermine l'espace disponible pour la fixation de la porte ou de la vitre, et du dos du poêle, ainsi que la taille de la chambre de combustion.

Il est donc difficile, dans le cas des poêles à bois, de réduire la profondeur du poêle vu la restriction de l'espace disponible pour l'insertion des bûches, celles-ci ayant tendance, lorsque la profondeur se réduit, à s'entasser les unes sur les autres dans le fond du poêle et à étouffer la combustion, ce qui à son tour conduit à l'encrassement de la cheminée, à la souillure de la vitre et à une chute du rendement.

De plus, les dimensions précitées ainsi que les autres caractéristiques des poêles actuels donnent à ceux-ci une apparence soit pesante, soit massive avec des surcoûts associés en matières, énergie et manutention.

Le poids de ces appareils peut être considérable et varier typiquement entre 40 et 250kg selon la puissance. Lorsqu'ils sont insérés, ces appareils requièrent une maçonnerie imposante. Il est difficile également de réduire la profondeur des poêles actuels sans diminuer le volume de la chambre de combustion de manière importante car un double conduit de réchauffage de l'air primaire est souvent ménagé dans le dos et les parois latérales de l'appareil, pour favoriser une bonne combustion.

Afin d'éviter des salissures importantes au niveau de la vitre, il est aussi nécessaire de brûler des essences de bois « nobles », c'est-à-dire coûteux, tels que chêne, hêtre, charme, bouleau par exemple.

Plusieurs fabricants ont essayé de donner à leurs appareils de chauffage un aspect « étroit » en ajoutant un cadre autour de l'appareil existant. La profondeur totale de ces appareils reste toutefois inchangée.

Par ailleurs, on connaît des appareils de chauffage fonctionnant au gaz dans lesquels le préchauffage de l'air primaire comprend une double enveloppe concentrique au conduit d'évacuation des gaz brûlés, ce qui permet de récupérer une partie de la chaleur perdue par l'évacuation des fumées pour préchauffer l'air primaire entrant.

### Buts de l'invention

La présente invention vise à mettre sur le marché une nouvelle génération d'appareils de chauffage domestiques obéissant aux impératifs de haut rendement actuels et dont la profondeur est de maximum 12 - 20cm, de manière à leur donner une apparence de poêle beaucoup plus contemporain.

L'invention a aussi pour but de fournir des appareils de chauffage dans lesquels la surface de vision du foyer est fortement augmentée par rapport à l'état de la technique.

L'invention a encore pour but de fournir des appareils rotatifs ou panoramiques afin d'assurer une vision optimale sur le foyer quelle que soit la position de l'utilisateur dans la pièce d'habitation.

### Principaux éléments caractéristiques de l'invention

La présente invention se rapporte à un appareil de chauffage à combustible solide comprenant une chambre de combustion munie d'une porte vitrée donnant sur l'extérieur, un dispositif d'admission d'air primaire extérieur dans ladite chambre, un conduit de sortie pour les gaz brûlés et un conduit de premier préchauffage de l'air primaire acheminant ce dernier dans le haut de la chambre de combustion, caractérisé en ce que l'appareil comporte un échangeur de chaleur de second préchauffage, situé dans le haut de la chambre de combustion à la jonction entre le conduit de premier préchauffage de l'air primaire et l'endroit où l'air de combustion pénètre dans la chambre de combustion, ledit échangeur comprenant un déflecteur externe déviant l'air primaire venant du conduit de premier préchauffage et l'envoyant dans le haut de la chambre de combustion, de haut en bas sur toute la hauteur de celle-ci, enveloppant ainsi d'air fortement réchauffé les gaz de combustion et comprenant des chicanes internes situées sur le passage des gaz brûlés, l'échange de chaleur de second préchauffage étant réalisé à la surface de l'échangeur séparant l'air de combustion ayant subi un premier préchauffage et les gaz brûlés.

Selon des exemples de modes de réalisation de l'invention, éventuellement préférés, l'appareil de chauffage comporte en outre une ou une combinaison appropriée des caractéristiques suivantes :
- le déflecteur externe de l'échangeur est convexe et courbe ou constitué de sections planes ;
- les chicanes internes sont constituées de tôles courbes ou de plaques planes ;
- l'échangeur de chaleur est relié d'une part à une section de conduit central pour l'évacuation des gaz brûlés et d'autre part à une enveloppe externe et concentrique à celui-ci destinée à acheminer de haut en bas l'air de combustion prélevé dans la pièce d'ambiance ou à l'extérieur de celle-ci ou de l'habitation ;
- l'échangeur de chaleur est relié d'une part à une section de conduit central pour l'évacuation des gaz brûlés et d'autre part à une section de double enveloppe au niveau des deux côtés de l'appareil qui assure le premier préchauffage de l'air de combustion prélevé dans la pièce d'ambiance ou à l'extérieur de celle-ci ou de l'habitation, tout en acheminant celui-ci de bas en haut vers l'échangeur précité ;
- l'appareil est essentiellement de forme parallélépipédique, avec un rapport longueur/profondeur ou largeur/profondeur au moins supérieur à 3 et une surface vitrée couvrant au moins 70% de la face de plus grande superficie ;
- la profondeur de l'appareil est essentiellement comprise entre 12 et 20 cm ;
- l'appareil comporte une seule vitre se trouvant à l'avant de l'appareil, le déflecteur externe de l'échangeur étant prolongé jusque dans le bas de la chambre de combustion au niveau d'un dos faisant face à la vitre, sous forme d'une boîte ou d'une plaque munie d'une pluralité de rangées d'orifices d'admission disposés horizontalement ;
- l'appareil comporte deux vitres se faisant face, l'échangeur étant prolongé vers le bas de la chambre de combustion par au plus quatre conduits tubulaires sis dans les coins de la chambre de combustion, chaque conduit étant muni d'une pluralité d'orifices d'admission répartis sur la hauteur dudit conduit ;
- le diamètre des orifices va croissant du haut vers le bas ;
- les conduits sont reliés partiellement ou complètement à une base de la chambre de combustion pour amener l'air préchauffé dans un lit de braises ;
- l'appareil comporte un accès sur sa partie supérieure sur au moins un côté du conduit d'évacuation des fumées ou sur au moins un de ses deux côtés latéraux, pour le chargement de bûches ou autres combustibles solides ;
- l'appareil comporte, pour le cas du chargement latéral de bûches, des moyens permettant de localiser des bûches à différentes hauteurs ;
- lesdits moyens sont des cornières ou des rails.

### Brève description des figures

La figure 1A représente une forme d'exécution d'un appareil de chauffage selon la présente invention, où la hauteur de l'appareil est supérieure à sa largeur.

La figure 1B représente une forme d'exécution d'un appareil de chauffage selon la présente invention, où la hauteur de l'appareil est inférieure à sa largeur.

La figure 2 représente une forme d'exécution de l'échangeur de chaleur dans un appareil de chauffage selon la présente invention.

La figure 3A représente une forme d'exécution de l'invention dans le cas où l'appareil présente deux vitres se faisant face et avec des conduits tubulaires d'admission d'air primaire préchauffé.

La figure 3B correspond à la forme d'exécution de la figure 3A où l'on montre la connexion des conduits tubulaires avec le bas de la chambre de combustion.

Les figures 4A à 4C représentent des vues d'une forme d'exécution de l'invention dans le cas où l'appareil présente une seule vitre et un dos lui faisant face avec une double paroi d'admission d'air préchauffé prolongeant l'échangeur

### Description de formes d'exécution préférées de l'invention

La restriction imposée à un appareil de chauffage dont au moins une dimension est réduite par rapport à l'état de l'art est de maintenir son rendement, à puissance donnée. Cette caractéristique peut être obtenue en préchauffant l'air primaire de manière plus efficace pour augmenter la qualité de la combustion.

Tout d'abord, les contraintes d'une vision étendue ou panoramique imposent que l'arrivée de l'air de combustion, ainsi que le préchauffage de celui-ci, dans l'appareil de chauffage selon l'invention soient effectués selon deux modalités possibles :
- soit par le haut, via un échangeur de chaleur relié d'une part à une section de conduit central pour l'évacuation des gaz brûlés et d'autre part à une enveloppe externe et concentrique à celui-ci, destinée à acheminer vers le bas l'air de combustion prélevé dans la pièce d'ambiance ou à l'extérieur de celle-ci ou de l'habitation, cet air de combustion étant ensuite de préférence canalisé dans le haut de l'appareil, de préférence au-dessus des flammes et de haut en bas sur toute la hauteur de la chambre de combustion, enveloppant ainsi d'air fortement réchauffé les gaz de combustion. Ceci entraîne une élimination optimale des imbrûlés et, dès lors, permet d'éviter de souiller la vitre et le conduit d'évacuation des fumées ;
- soit par le bas, à partir de la partie inférieure de l'appareil, via un préchauffage utilisant une section de double enveloppe au niveau des deux côtés de l'appareil avec ensuite passage dans l'échangeur précité, l'air préchauffé étant enfin canalisé ou forcé à s'écouler dans le haut de l'appareil, de préférence au-dessus des flammes et de haut en bas sur toute la hauteur de la chambre de combustion, enveloppant ainsi d'air fortement réchauffé les gaz de combustion. Ceci entraîne également une élimination optimale des imbrûlés et, dès lors, permet d'éviter de souiller la vitre et le conduit d'évacuation des fumées.

Selon l'invention, l'air primaire de combustion est préchauffé, par exemple via un conduit à double enveloppe situé au niveau de la buse d'évacuation des fumées, et ensuite à l'intérieur du poêle, où l'échangeur précité apporte un préchauffage supplémentaire, ce qui améliore très fortement la combustion.

Par la suite, on parlera indifféremment de vitre et porte vitrée.

Ces modalités d'alimentation en air préchauffé sont un préalable à la réalisation d'un appareil de chauffage de faible profondeur, comme cela est visé par la présente invention.

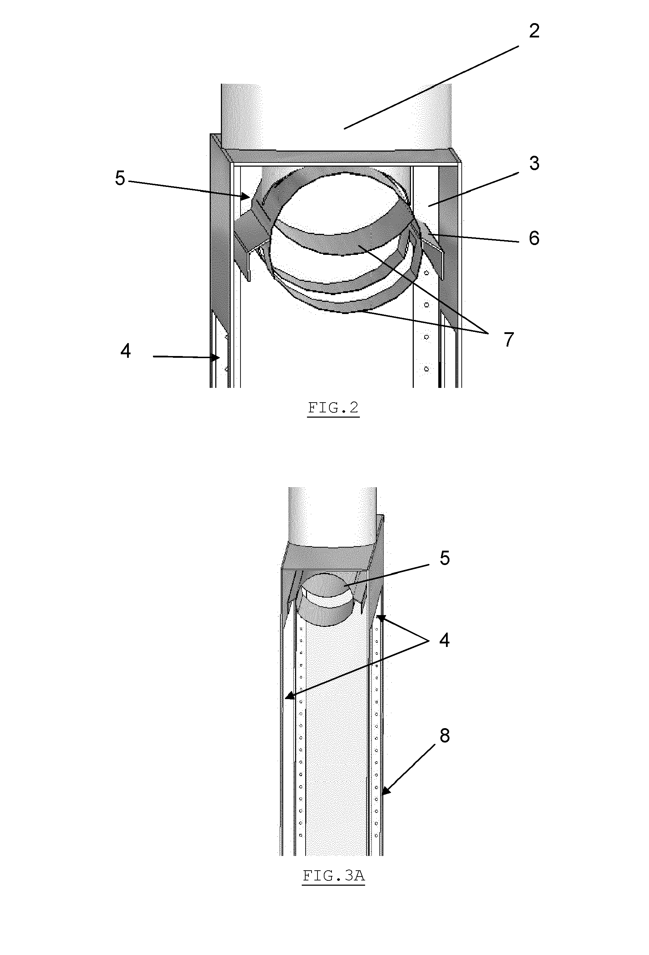

Selon une première modalité de réalisation de l'invention représentée à la FIG. 2, l'échangeur de chaleur 5 est situé, au sein de la chambre de combustion, à l'endroit où le conduit de cheminée à double enveloppe 2, 3 entre en contact avec la chambre de combustion, c'est-à-dire à l'admission de l'air primaire acheminé de l'extérieur par le conduit 3, cet air primaire étant réchauffé au contact de la paroi chaude du conduit d'évacuation des fumées 2, à l'extérieur du poêle et au contact de l'échangeur 5, à l'intérieur du poêle. De par la présence de l'échangeur 5 et de sa configuration particulière, la température de l'air primaire préchauffé est donc plus élevée. L'échangeur 5 forme ainsi un tout avec ce double conduit 2, 3. L'échangeur 5 se comporte comme un obstacle ou un déflecteur qui va dévier l'air primaire arrivant dans la chambre de combustion dans le haut de l'appareil, de préférence au-dessus des flammes et de haut en bas sur toute la hauteur de la chambre de combustion, enveloppant ainsi d'air fortement réchauffé les gaz de combustion. Ceci entraîne une élimination optimale des imbrûlés et, dès lors, permet d'éviter de souiller la vitre et le conduit d'évacuation des fumées. Sa paroi externe 6 est de préférence convexe et courbe pour faciliter un écoulement fluide de l'air de combustion, mais cette paroi peut également être constituée de parties droites.

L'intérieur de l'échangeur 5 qui est en liaison avec l'évacuation des gaz brûlés dans l'enveloppe interne 2 du conduit à double enveloppe est avantageusement muni de sections constituant des chicanes 7 qui favorisent l'échange de chaleur avec l'enveloppe externe 3. Ces sections peuvent être courbes (par exemple, tôle d'acier) mais aussi droites si les matières utilisées ne sont pas formables (par exemple, vermiculite)

Ainsi, de par la présence de l'échangeur 5, la température des fumées est réduite ce qui augmente le rendement de l'appareil et l'air entrant dans la chambre de combustion est réchauffé davantage par rapport à la configuration sans échangeur d'admission, ce qui favorise la combustion tout en limitant les émissions polluantes.

Les avantages de la configuration selon l'invention sont, à puissance inchangée, que l'espace et les matières premières requis pour la fabrication sont fortement réduits (jusqu'à 50%), de même que la manutention requise. Pour les foyers insérés, on pourra également prévoir beaucoup moins de maçonnerie.

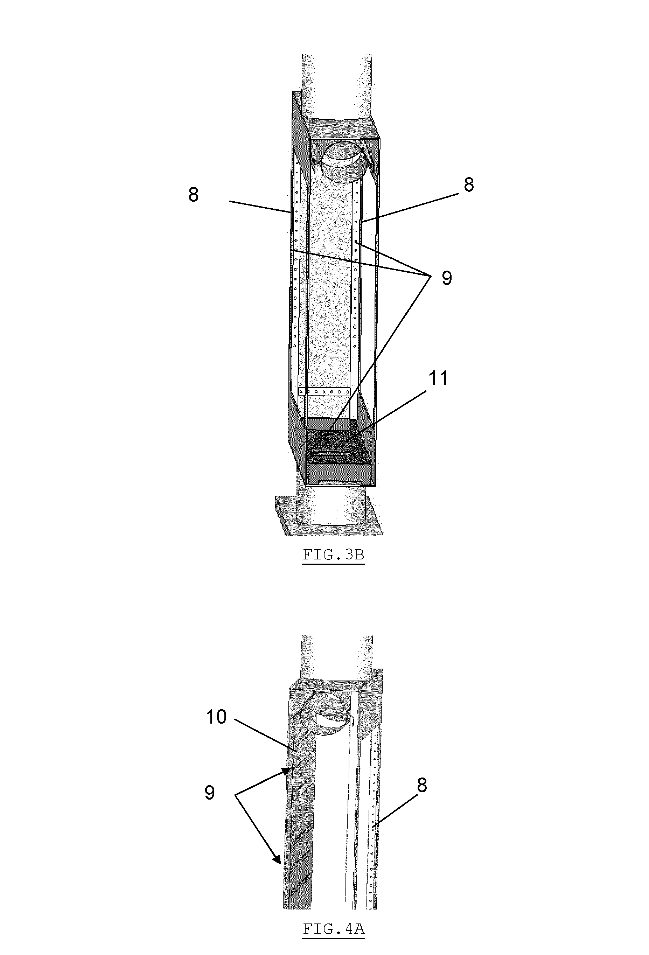

Selon une autre modalité de réalisation de l'invention représentée sur les FIG. 3A et 3B, le poêle peut être muni de deux vitres 4 se faisant face (poêle dit « réversible ») et on peut dès lors avantageusement prévoir quatre conduits tubulaires 8 correspondant aux quatre coins de la chambre de combustion en vue d'amener l'air préchauffé depuis l'échangeur 5 vers l'intérieur ou le bas de la chambre de combustion. Ces conduits tubulaires peuvent avoir une forme ronde, carrée ou toute autre forme géométrique. On peut prévoir sur toute la hauteur de ces conduits 8 des orifices 9 à répartir, de diamètres respectifs croissants en partant du bas, par exemple, à titre illustratif, 1cm, 0,75cm et 0,5cm respectivement. Sur une même ligne les orifices sont par exemple espacés de 2cm. Comme représenté sur la FIG. 3B, les quatre conduits 8 peuvent être reliés à la base 11 de la chambre de combustion, complètement ou partiellement, pour amener l'air préchauffé dans le lit de braises. Les orifices 9 peuvent également être remplacés par des ouvertures en lignes (ou fentes).

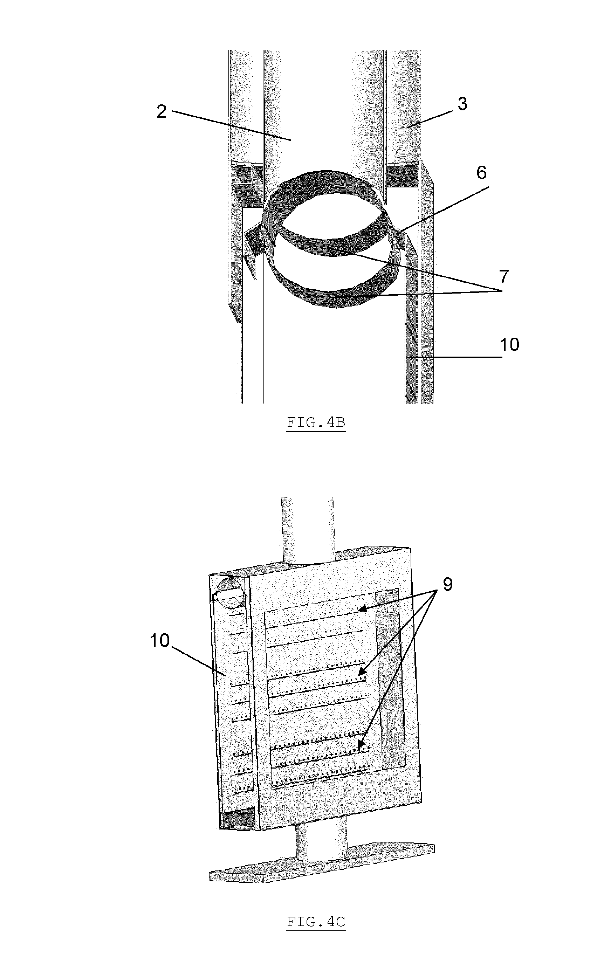

Selon une modalité alternative de réalisation de l'invention, dans laquelle il n'y a qu'une seule vitre, comme représenté sur les FIG. 4A à 4C, on peut prolonger l'échangeur au dos non vitré de l'appareil au moyen d'une boîte ou plaque conductrice 10, par exemple en fonte. Celle-ci comportera avantageusement, par exemple, 3 rangées d'orifices 9 de 0,75cm dans le bas, 0,50cm au milieu et 0,25cm en haut, ces orifices étant par exemple espacés de 2,5cm et les rangées réparties sur la hauteur du dos 10. On a alors également une progressivité des ouvertures du haut vers le bas pour favoriser un bon acheminement de l'air de combustion ainsi préchauffé de manière optimale.

Le chargement des bûches de bois peut être effectué, dans le cas d'un poêle autonome selon l'invention, à partir du haut de chaque côté du conduit d'évacuation des fumées ou à partir des deux côtés du poêle (non représenté). Ces dispositions de chargement vont permettre de supprimer la nécessité d'ouvrir la porte vitrée pour le chargement. Celle-ci devra seulement être ouverte lorsque le poêle n'est plus en fonctionnement et bien refroidi, pour les besoins du nettoyage ou de l'entretien de la vitre. En utilisation, la vitre va rester propre même à bas régime du fait que l'air de combustion est fortement préchauffé et enveloppe littéralement les gaz de combustion. On a également constaté que, grâce à cette combustion fortement améliorée, il est possible, au moyen du poêle selon l'invention, de brûler des résineux tels que le sapin, qui est au moins de moitié moins cher que le bois noble.

Lorsqu'il est inséré dans une maçonnerie, l'appareil de chauffage selon l'invention va également permettre le chargement de bûches de bois par les côtés du poêle, par exemple grâce à un montage pivotant du corps de chauffe.

Vu la très faible épaisseur prévue pour la chambre de combustion (12 - 20cm), il est nécessaire de prévoir un moyen de localiser les bûches de bois en hauteur, par exemple au moyen de rails, cornières, etc. (non représenté). En effet, ceci permet d'éviter que, les bûches se collent contre la ou les vitres de l'appareil de chauffage.

Le poêle selon l'invention peut alternativement être équipé d'une admission supplémentaire d'air située dans le fond de l'appareil. Celle-ci peut s'avérer particulièrement utile pour amplifier le feu ou accélérer la combustion des braises qui s'accumulent à la fin du cycle de combustion du bois. Dans le but de permettre une accumulation rationnelle des cendres, la partie inférieure du poêle est aveugle. Afin d'éviter que les cendres se répandent sur la vitre, il est important que la vitre et le volume aveugle soient dans le prolongement l'un de l'autre. Dans cette partie inférieure, ou sous celle-ci, se trouve éventuellement un cendrier qui permet de retirer les cendres générées par la combustion (non représenté).

Avantageusement, le cendrier disposé dans la partie inférieure du poêle sera recouvert de quelques traverses ou d'une grille. Le papier et le petit bois d'allumage pourront alors être disposés dans le cendrier, la première bûche étant ensuite placée sur ces traverses ou cette grille.

### Symboles de référence

- 1: appareil de chauffage
- 2: conduit d'évacuation des gaz brûlés
- 3: conduit de préchauffage de l'air primaire
- 4: vitre
- 5: échangeur de chaleur à l'admission d'air
- 6: surface externe de l'échangeur
- 7: chicane(s)
- 8: conduits tubulaires
- 9: orifice d'admission
- 10: dos

## Revendications

1. Appareil de chauffage (1) à combustible solide comprenant une chambre de combustion munie d'une porte vitrée (4) donnant sur l'extérieur, un dispositif d'admission d'air primaire extérieur dans ladite chambre, un conduit de sortie pour les gaz brûlés (2) et un conduit de premier préchauffage de l'air primaire (3) acheminant ce dernier dans le haut de la chambre de combustion, **caractérisé en ce que** l'appareil comporte un échangeur de chaleur (5) de second préchauffage, situé dans le haut de la chambre de combustion à la jonction entre le conduit de premier préchauffage de l'air primaire (3) et l'endroit où l'air de combustion pénètre dans la chambre de combustion, ledit échangeur (5) comprenant un déflecteur externe (6) déviant l'air primaire venant du conduit de premier préchauffage (3) et l'envoyant dans le haut de la chambre de combustion, de haut en bas sur toute la hauteur de celle-ci, enveloppant ainsi d'air fortement réchauffé les gaz de combustion et comprenant des chicanes internes (7) situées sur le passage des gaz brûlés, l'échange de chaleur de second préchauffage étant réalisé à la surface de l'échangeur (5) séparant l'air de combustion ayant subi un premier préchauffage et les gaz brûlés.

2. Appareil de chauffage selon la revendication 1, **caractérisé en ce que** le déflecteur externe (6) de l'échangeur (5) est convexe et courbe ou constitué de sections planes.

3. Appareil de chauffage selon la revendication 1, **caractérisé en ce que** les chicanes internes (7) sont constituées de tôles courbes ou de plaques planes.

4. Appareil de chauffage selon la revendication 1, **caractérisé en ce que** l'échangeur de chaleur (5) est relié d'une part à une section de conduit central pour l'évacuation des gaz brûlés (2) et d'autre part à une enveloppe externe et concentrique à celui-ci (3) destinée à acheminer de haut en bas l'air de combustion prélevé dans la pièce d'ambiance ou à l'extérieur de celle-ci ou de l'habitation.

5. Appareil de chauffage selon la revendication 1, **caractérisé en ce que** l'échangeur de chaleur (5) est relié d'une part à une section de conduit central pour l'évacuation des gaz brûlés (2) et d'autre part à une section de double enveloppe au niveau des deux côtés de l'appareil qui assure le premier préchauffage de l'air de combustion prélevé dans la pièce d'ambiance ou à l'extérieur de celle-ci ou de l'habitation, tout en acheminant celui-ci de bas en haut vers l'échangeur précité.

6. Appareil de chauffage selon la revendication 4, **caractérisé en ce que** l'appareil est essentiellement de forme parallélépipédique, avec un rapport longueur/profondeur ou largeur/profondeur au moins supérieur à 3 et une surface vitrée couvrant au moins 70% de la face de plus grande superficie.

7. Appareil de chauffage selon la revendication 6, **caractérisé en ce que** la profondeur de l'appareil est essentiellement comprise entre 12 et 20 cm.

8. Appareil de chauffage selon la revendication 6, **caractérisé en ce que** l'appareil comporte une seule vitre (4) se trouvant à l'avant de l'appareil, le déflecteur externe (6) de l'échangeur (5) étant prolongé jusque dans le bas de la chambre de combustion au niveau d'un dos faisant face à la vitre, sous forme d'une boîte ou d'une plaque (10) munie d'une pluralité de rangées d'orifices d'admission (9) disposés horizontalement.

9. Appareil de chauffage selon la revendication 6, **caractérisé en ce que** l'appareil comporte deux vitres (4) se faisant face, l'échangeur (5) étant prolongé vers le bas de la chambre de combustion par au plus quatre conduits tubulaires (8) sis dans les coins de la chambre de combustion, chaque conduit étant muni d'une pluralité d'orifices d'admission (9) répartis sur la hauteur dudit conduit.

10. Appareil de chauffage selon la revendication 8 ou 9, **caractérisé en ce que** le diamètre des orifices (9) va croissant du haut vers le bas.

11. Appareil de chauffage selon la revendication 9, **caractérisé en ce que** les conduits (8) sont reliés partiellement ou complètement à une base de la chambre de combustion (11) pour amener l'air préchauffé dans un lit de braises.

12. Appareil de chauffage selon la revendication 1, **caractérisé en ce que** l'appareil comporte un accès sur sa partie supérieure sur au moins un côté du conduit d'évacuation des fumées ou sur au moins un de ses deux côtés latéraux, pour le chargement de bûches ou autres combustibles solides.

13. Appareil de chauffage selon la revendication 12, **caractérisé en ce que** l'appareil comporte, pour le cas du chargement latéral de bûches, des moyens permettant de localiser des bûches à différentes hauteurs.

14. Appareil de chauffage selon la revendication 12, **caractérisé en ce que** lesdits moyens sont des cornières ou des rails.
